# EUROPEAN PATENT APPLICATION

(11) **EP 4 822 823 A1**
(43) Date of publication of application: **14.10.2026**
(21) Application number: 26166310.8
(22) Date of filing: 20.03.2026
(51) Int. Cl.: H01M 10/613, H01M 10/625, H01M 10/6556, H01M 50/204, H01M 50/358, B60K 1/00

(54) **VEHICLE STORAGE BATTERY PACK**

(30) Priority: 26.03.2025 JP 2025052476
(71) Applicant: Toyota Jidosha Kabushiki Kaisha, Toyota-shi, Aichi-ken 471-8571 (JP)
(72) Inventor: HORIGUCHI, Kotaro, Toyota-shi, Aichi-ken, 471-8571 (JP); TAKAHASHI, Isao, Toyota-shi, Aichi-ken, 471-8571 (JP)
(74) Representative: TBK

(57) **Abstract**

A vehicle storage battery pack includes: a storage battery cell installed to a vehicle; a lower case that has the storage battery cell mounted thereto and that includes a region separated from a lower face of the storage battery cell, the region configuring a smoke discharge channel; and a heat receiving member that is arranged on a lower face of the lower case and that receives heat of the storage battery cell, wherein the lower face of the lower case at a region configuring the smoke discharge channel is arranged lower than a lower face of the heat receiving member.

## Description

### BACKGROUND

### Technical Field

The present disclosure relates to a vehicle storage battery pack.

### Related Art

A storage battery pack disclosed in Japanese Patent Application Laid-Open (JP-A) No. 2023-46945 is installed in a lower portion of a vehicle body. In this storage battery pack, plural storage battery cells are mounted alongside each other in a lower case, and the storage battery cells are covered by an upper case. Moreover, in the storage battery pack, a cooler is attached to the lower faces of the plural storage battery cells, with the lower case interposed therebetween.

In a storage battery pack installed to a vehicle, a smoke discharge channel is provided to release smoke to outside the vehicle in the event that smoke has been generated, such as during a collision. Such a smoke discharge channel is configured by the lower case, and there is a desire to secure a large channel cross-sectional area.

### SUMMARY

The present disclosure provides a vehicle storage battery pack capable of securing a large channel cross-sectional area for a smoke discharge channel configured by a lower case.

A vehicle storage battery pack of a first aspect of the present disclosure includes a storage battery cell installed to a vehicle; a lower case that has the storage battery cell mounted thereto and that includes a region separated from a lower face of the storage battery cell, the region configuring a smoke discharge channel; and a heat receiving member that is arranged on a lower face of the lower case and that receives heat of the storage battery cell, wherein the lower face of the lower case at a region configuring the smoke discharge channel is arranged lower than a lower face of the heat receiving member.

In the vehicle storage battery pack of the first aspect, the lower face of the lower case at the region configuring the smoke discharge channel is arranged to be lower than the lower face of the heat receiving member. Therefore, in the vehicle storage battery pack, a larger channel cross-sectional area of the smoke discharge channel may be secured than, for example, cases in which the lower face of the region of the lower case configuring the smoke discharge channel is at the same height as the lower face of the heat receiving member, or is above the lower face of the heat receiving member.

A vehicle storage battery pack of a second aspect of the present disclosure is the vehicle storage battery pack of the first aspect, wherein the lower case is mounted with plural of the storage battery cells mounted in a row, and the region of the lower case configuring the smoke discharge channel extends in a row direction of the storage battery cells.

In the vehicle storage battery pack of the second aspect, the region of the lower case configuring the smoke discharge channel extends along the storage battery cell row direction. Therefore, in the vehicle storage battery pack the smoke discharge channel may be provided common to plural of the storage battery cells.

A vehicle storage battery pack of a third aspect of the present disclosure is the vehicle storage battery pack of the second aspect, wherein a distance from a face of the lower case where the storage battery cells are mounted to a bottom face of the region configuring the smoke discharge channel is constant along the row direction.

In the vehicle storage battery pack of the third aspect, the distance from the face of the lower case where the storage battery cells are mounted to the bottom face of the region configuring the smoke discharge channel is constant along the extension direction of the region configuring the smoke discharge channel (i.e., the storage battery cell row direction). Therefore, in the vehicle storage battery pack, the resistance to smoke flowing in the smoke discharge channel may be reduced compared, for example to configurations in which this distance changes along the extension direction of the region configuring the smoke discharge channel.

The vehicle storage battery pack of a fourth aspect of the present disclosure is the vehicle storage battery pack of the second aspect or the third aspect, wherein a distance between opposing wall faces of the region of the lower case configuring the smoke discharge channel is constant along the row direction.

In the vehicle storage battery pack of the fourth aspect, the distance between the opposing wall faces of the region of the lower case configuring the smoke discharge channel is constant along the extension direction of the region configuring the smoke discharge channel (i.e., the storage battery cell row direction). Therefore, in the vehicle storage battery pack, the resistance to smoke flowing in the smoke discharge channel may be reduced compared, for example, to configurations in which this distance changes along the extension direction of the region configuring the smoke discharge channel.

The present disclosure enables a large channel cross-sectional area to be secured in a smoke discharge channel configured by a lower case.

### BRIEF DESCRIPTION OF THE DRAWINGS

Exemplary embodiments of the present disclosure will be described in detail based on the following figures, wherein:
Fig. 1 is a plan view illustrating a vehicle structure provided with a vehicle storage battery pack of a first exemplary embodiment;
Fig. 2 is a perspective view illustrating a vehicle storage battery pack and a smoke discharge structure of a first exemplary embodiment;
Fig. 3 is a perspective view illustrating a smoke discharge structure of a vehicle storage battery pack of the first exemplary embodiment;
Fig. 4 is a cross-section illustrating a vehicle structure provided with a vehicle storage battery pack of the first exemplary embodiment, sectioned along a vehicle front-rear direction;
Fig. 5 is a cross-section illustrating a vehicle structure provided with a vehicle storage battery pack of the first exemplary embodiment, sectioned along a vehicle width direction;
Fig. 6 is a cross-section illustrating an enlargement of a vehicle storage battery pack of the first exemplary embodiment, sectioned along the vehicle front-rear direction;
Fig. 7 is a cross-section illustrating an enlargement of a vehicle storage battery pack of the first exemplary embodiment, sectioned along the vehicle width direction;
Fig. 8 is a perspective view illustrating a vehicle storage battery pack of the first exemplary embodiment;
Fig. 9 is a cross-section illustrating a vehicle storage battery pack of the first exemplary embodiment, sectioned along the vehicle width direction; and
Fig. 10 is a plan view illustrating a vehicle storage battery pack of the first exemplary embodiment.

### DETAILED DESCRIPTION

Description follows regarding a vehicle structure provided with a vehicle storage battery pack of a first exemplary embodiment of the present disclosure, with reference to the drawings. Note that description will mainly focus on areas needed to explain the technology disclosed herein, and areas omitted from explanation are known technology. The same or similar reference numerals will be appended across the drawings to the same or equivalent members, and explanation thereof will be omitted. Furthermore, when plural of the same or equivalent members are included in the drawings, in order to enhance drawing clarity, sometimes reference numerals are only appended to some thereof. Arrow FR, arrow UP, and arrow LH in the drawings respectively indicate vehicle forward, vehicle upward, and vehicle leftward directions of a vehicle 10. When front and rear, up and down, and left and right directions are employed in the following description without particular explanation thereof, then these respectively indicate front and rear in the vehicle front-rear direction, up and down in the vehicle height direction, and left and right in the vehicle width direction (left-right direction).

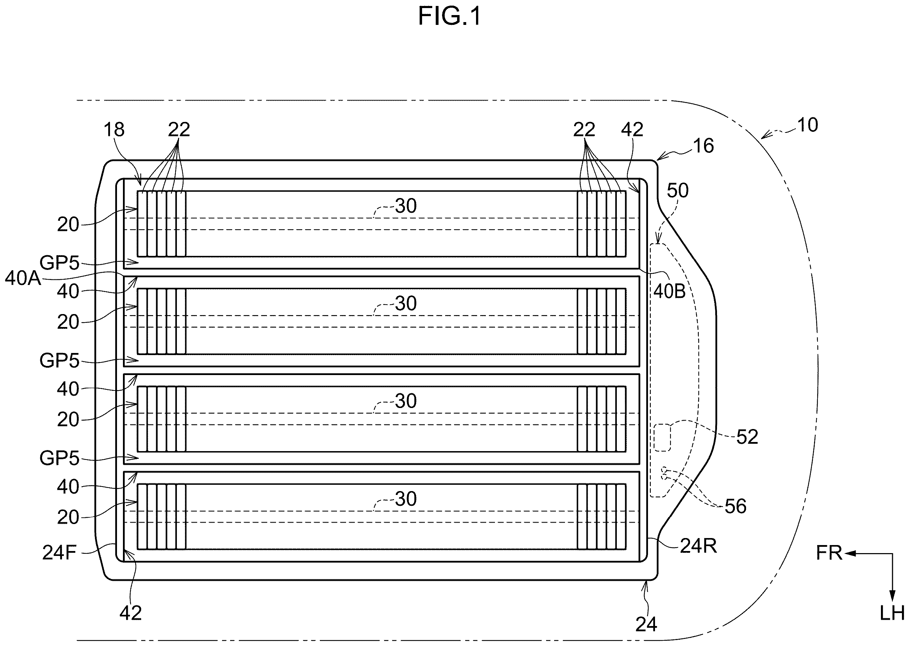

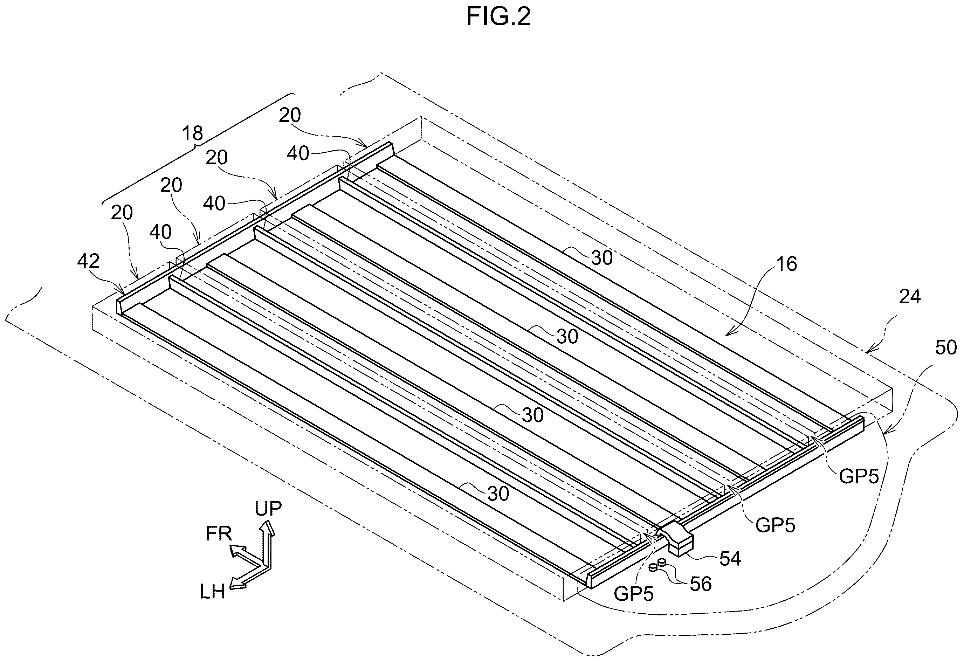

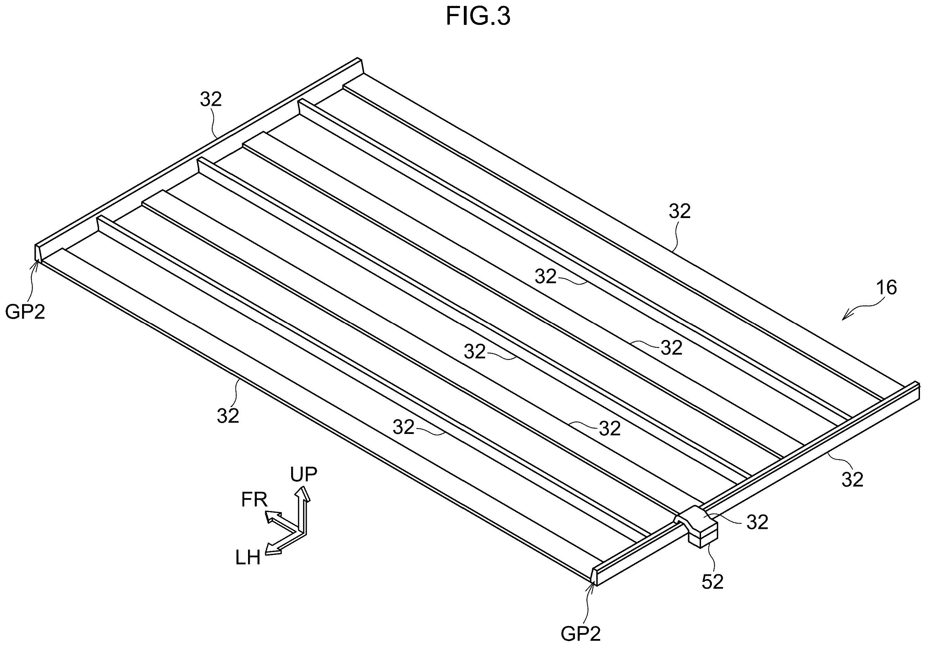

Fig. 1 is a schematic plan view illustrating parts of the vehicle 10 provided with the vehicle structure 14 of the first exemplary embodiment. Fig. 2 is a schematic perspective view illustrating a storage battery pack 18 and a smoke discharge structure 16 provided to a vehicle structure 14 of the first exemplary embodiment. Fig. 3 is a perspective view illustrating a smoke discharge channel 32 configuring the smoke discharge structure 16 of the vehicle structure 14, as extracted from the other configuration.

As illustrated in Fig. 1, the storage battery pack 18 is installed to the vehicle 10. The storage battery pack 18 includes, as illustrated in Fig. 2, plural (e.g., four in the present exemplary embodiment) storage battery modules 20. The plural storage battery modules 20 are arranged alongside each other in the vehicle width direction. Gaps GP5 are configured between the storage battery modules 20. Since there are four of the storage battery modules 20 in the present exemplary embodiment, there are three of the gaps GP5 configured between the storage battery modules 20.

The storage battery modules 20 each include plural storage battery cells 22. The plural storage battery cells 22 are arranged in the storage battery modules 20 in a row along the vehicle front-rear direction. Namely, the storage battery pack 18 is configured by plural storage battery modules 20 arranged in a row along the vehicle width direction, with each of the storage battery modules 20 including plural storage battery cells 22 arranged in a row along the vehicle front-rear direction. The vehicle front-rear direction is an example of a storage battery cell row direction for rows of the plural storage battery cells 22 in the technology disclosed herein, and the vehicle width direction is an example of a direction orthogonal to the storage battery cell row direction.

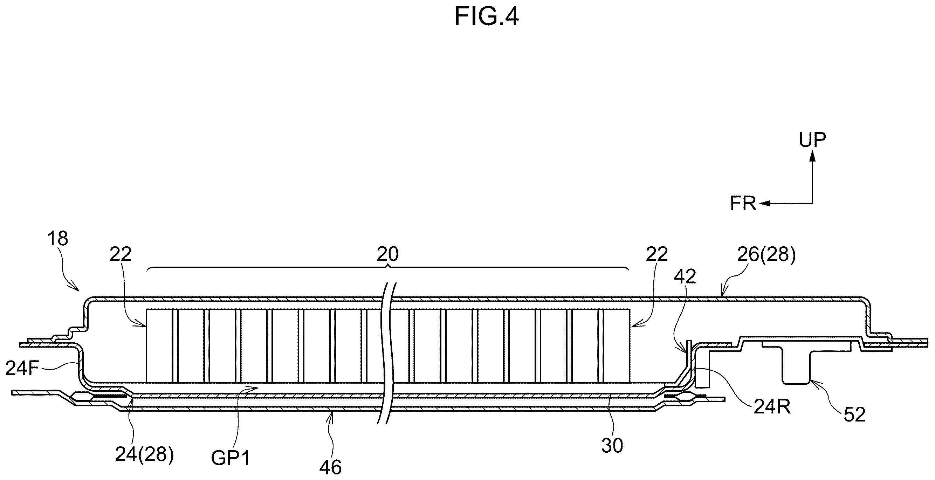

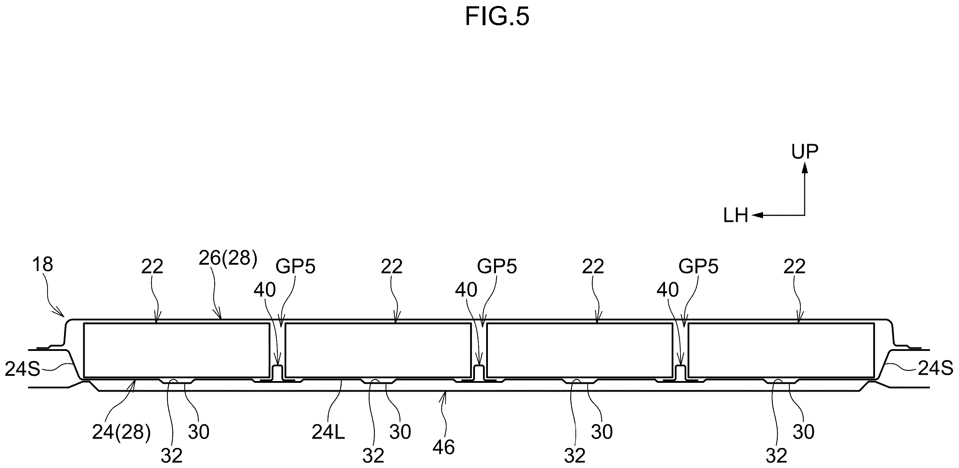

As illustrated in Fig. 4 and Fig. 5, the storage battery pack 18 includes a lower case 24 and an upper cover 26. The lower case 24 is a box-shaped member capable of housing the storage battery modules 20. The lower case 24 includes a lower plate 24L, a front plate 24F, a rear plate 24R, and a left-right pair of side plates 24S. The lower plate 24L is a plate-shaped region that supports the storage battery modules 20 from below. The front plate 24F and the rear plate 24R are each plate-shaped regions respectively provided so as to project upward from the front side and the rear side of the lower plate 24L. The side plates 24S are plate-shaped regions provided so as to project upward from the two vehicle width direction sides of the lower plate 24L. The lower case 24 is open upward.

The upper cover 26 is a lid-shaped member for closing off the opening portion of the lower case 24. A storage battery case 28 is configured by lower case 24 and the upper cover 26, with a periphery of the lower case 24 and a periphery of the upper cover 26 joined together. The plural storage battery modules 20, each configured by the plural storage battery cells 22, are housed in the space inside the storage battery case 28 in a row along the vehicle width direction. This means that the plural storage battery cells 22 are mounted on the lower plate 24L of the lower case 24 in rows along the vehicle front-rear direction.

A shared panel 46 is arranged at a lower side of the storage battery pack 18. In the present exemplary embodiment, the shared panel 46 covers the lower face of the storage battery pack 18, and protects the storage battery modules 20 from foreign objects and the like coming from the road surface.

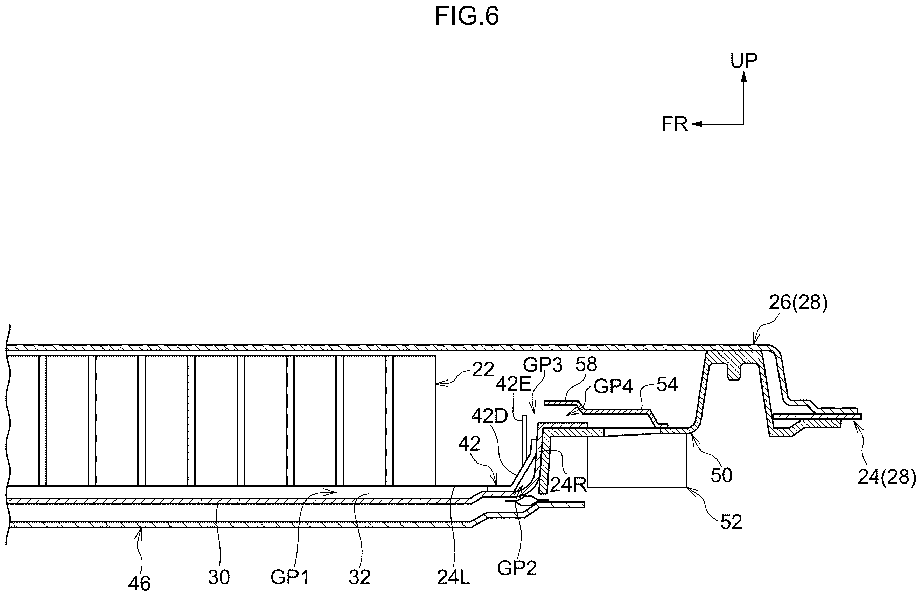

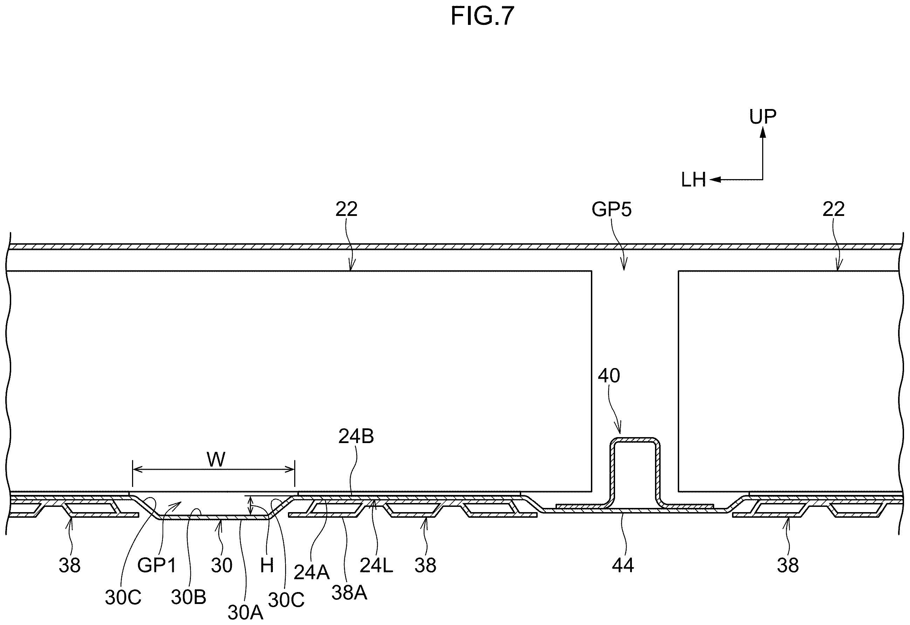

As illustrated in Fig. 6 and Fig. 7, the lower plate 24L of the lower case 24 is bonded to the lower face of each of the storage battery cells 22 using an adhesive. Plural downward protrusions 30 (e.g., the same number thereof as the number of storage battery modules 20) are formed to the lower plate 24L. The downward protrusions 30 each project downward at a vehicle width direction central position of the respective storage battery module 20. A gap GP1 is configured at each of the downward protrusions 30 where the lower case 24 is locally separated from the lower face of the storage battery cells 22. Specifically, the regions on the lower case 24 where the downward protrusions 30 are formed are indented downward. The gaps GP1 are configured by the inside of these indentations. The downward protrusions 30 are formed to each of the storage battery modules 20 so as to extend along the vehicle front-rear direction, namely along the storage battery cell 22 row direction. A vehicle front-rear direction length of the downward protrusions 30 is about the same as the vehicle front-rear direction length of the storage battery modules 20, and the downward protrusions 30 extend contiguously along the vehicle front-rear direction from a vicinity of the front plate 24F to a vicinity of the rear plate 24R.

Part of the smoke discharge channel 32 is configured by the gaps GP1 resulting from the downward protrusions 30 being separated from the lower faces of the storage battery cells 22. Configuration is such that, in cases in which gas containing smoke (hereafter such gas is simply referred to as "smoke") has been generated in the storage battery cells 22 due to some reason or other, such smoke is discharged from a vehicle width direction central position on the lower faces of the storage battery cells 22. Therefore, the smoke generated by the storage battery cells 22 flows into the gaps GP1 configured by the downward protrusions 30. The lower case 24 is an example of a channel member configuring the smoke discharge channel 32.

As illustrated in Fig. 7, coolers 38 serving as examples of heat receiving members are provided to the lower case 24 to receive heat from the storage battery cells 22. The coolers 38 are arranged on a lower face 24A at different regions on the lower case 24 from the downward protrusions 30, which are regions configuring the smoke discharge channel 32. Specifically, the coolers 38 configure coolant channels extending along the vehicle front-rear direction on the lower face 24A of the lower case 24, at the vehicle width direction sides of the downward protrusions 30. The heat of the coolers 38 is transmitted to coolant flowing in the coolant channels, enabling the storage battery cells 22 to be cooled.

As illustrated in Fig. 7, a lower face 30A of each of the downward protrusions 30 in the lower case 24 is arranged so as to be lower than the lower faces 38A of the coolers 38. Note that the lower faces 30A of the downward protrusions 30 are included in the lower face 24A of the lower case 24. Namely, the lower faces 30A indicate regions that are part of the lower face 24A.

The downward protrusions 30 in the present exemplary embodiment each have a flattened trapezoidal profile with a longer upper base than lower base when viewed in a lateral direction (vehicle width direction) cross-section orthogonal to their extension direction.

Moreover, a distance H from a face 24B where the storage battery cells 22 are mounted on the lower case 24, to the bottom face 30B of the downward protrusions 30, is constant along the extension direction of the downward protrusions 30. Note that reference to being "constant" includes error (e.g., manufacturing tolerance and the like) of ± 10% with respect to the distance H design value. Moreover, the bottom faces 30B of the downward protrusions 30 are faces on the opposite side to the lower faces 30A of the downward protrusions 30.

A distance (which may be called a width) W between opposing wall faces 30C at the inside of the downward protrusions 30 on the lower case 24 is also constant along the extension direction of the downward protrusions 30, i.e. constant along the row direction of the storage battery cells 22. Note that reference to being "constant" includes error (manufacturing tolerance and the like) of ± 10% with respect to the design value of distance W.

As illustrated in Fig. 1, Fig. 2, Fig. 5, and Fig. 7, a reinforcement member 40 is arranged in each of the gaps GP5 between the storage battery modules 20. As illustrated in Fig. 7, the reinforcement members 40 are each configured with a downwardly-open, substantially hat-shaped cross-section profile as viewed in vehicle width direction cross-section.

As illustrated in Fig. 1, the reinforcement members 40 each have a length that reaches the vicinities of the front plate 24F and the rear plate 24R of the lower case 24. A front end 40A (see Fig. 1) of the reinforcement member 40, and a rear end 40B thereof, are joined to the front plate 24F and the rear plate 24R of the lower case 24 by respective joining members 42. The reinforcement members 40 thereby reinforce the storage battery pack 18.

As illustrated in Fig. 6, a first separation section 42D is formed to the joining member 42. The first separation section 42D is formed inclined in vehicle front-rear direction cross-section, so as to generate a gap GP2 between the first separation section 42D and the lower case 24. This gap GP2 is contiguous along the vehicle width direction, and forms part of the smoke discharge channel 32.

As illustrated in Fig. 7, a cell pedestal 44 is formed to the lower plate 24L of the lower case 24 at a position corresponding to the reinforcement member 40. The cell pedestal 44 is region where the lower plate 24L of the lower case 24 is formed as a downward protrusion at a position corresponding to the reinforcement member 40. The cell pedestal 44 is joined to the reinforcement member 40, and closes off an opening portion at the lower side of the reinforcement member 40.

A front end 40A and a rear end 40B of the reinforcement member 40 are open (see Fig. 1), and are in communication with the gaps GP2 illustrated in Fig. 6. Namely, a portion of the closed cross-section profile (i.e., a profile closed in vehicle width direction cross-section) configured by the reinforcement member 40 and the cell pedestal 44 is in communication with the smoke discharge channel 32 configured by the gaps GP2. The closed cross-section profile configured by the reinforcement member 40 and the cell pedestal 44 accordingly also forms part of the smoke discharge channel 32. In the present exemplary embodiment, the cell pedestals 44 also double up as part of the lower case 24. In other words, the lower case 24 that also performs the role of the cell pedestals 44 is a structure that extends so as to span plural of the reinforcement members 40. In other words, the cell pedestals 44, which are integrally formed by the lower case 24, configure part of the smoke discharge channel 32 together with the plural reinforcement members 40.

As illustrated in Fig. 1, a connector block 50 is arranged at a vehicle rear side of the lower case 24.

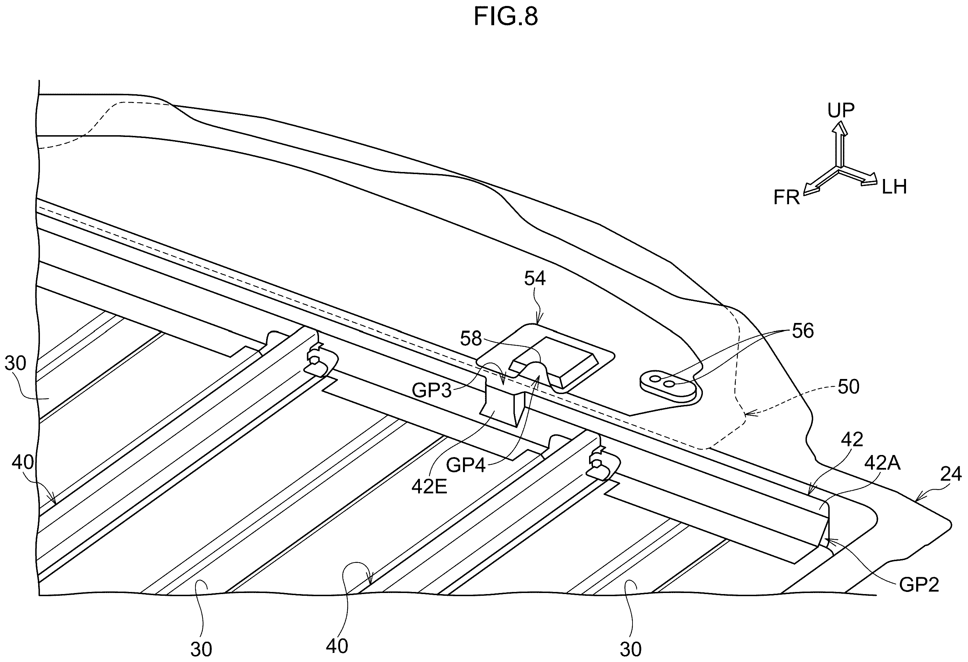

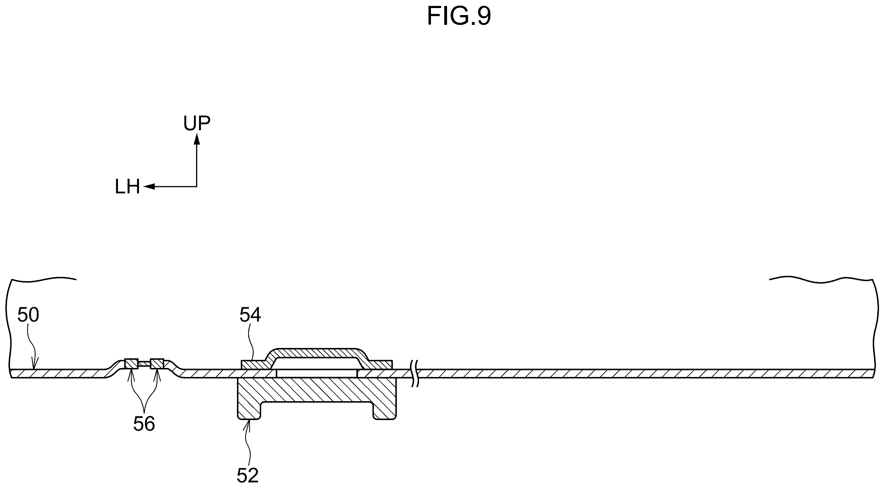

As illustrated in Fig. 8 and Fig. 9, a smoke discharge vent 52 is attached to the connector block 50. A cover plate 54 is attached to the connector block 50 and spans from the storage battery pack 18 across the smoke discharge vent 52 so as to configure part of the smoke discharge channel 32 between itself and the connector block 50.

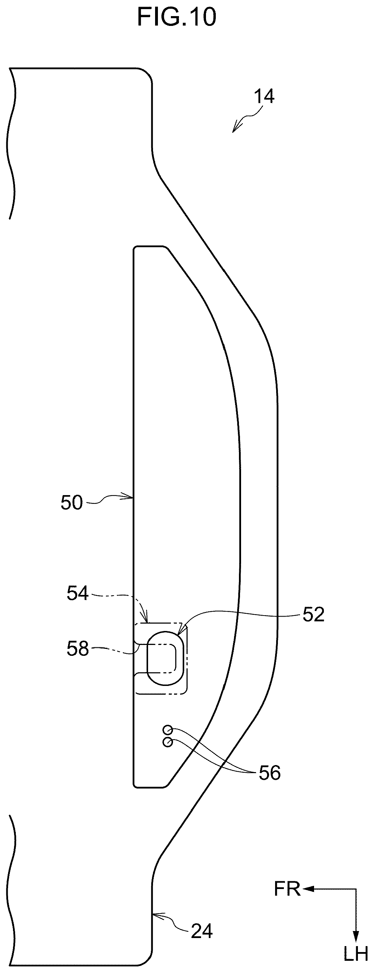

An upward protrusion 58 (see Fig. 10) is formed to the cover plate 54. The upward protrusion 58 has a profile in which a vehicle width direction central portion thereof is curved upward in the vicinity of the vehicle front side. A gap GP4 is configured between the cover plate 54 and the lower case 24 by the upward protrusion 58 being formed in this manner. The gap GP4 enables smoke to move in the vehicle front-rear direction, and configures part of the smoke discharge channel 32.

A second separation portion 42E is provided to the joining member 42 arranged at the vehicle rear side from out of the two joining members 42. The second separation portion 42E is formed at a position in the vehicle width direction corresponding to the upward protrusion 58. A gap GP3 is configured between the second separation portion 42E and the rear plate 24R of the lower case 24. The smoke discharge channel 32 is accordingly formed in the storage battery pack 18 so as to be contiguous from the gaps GP1 between the lower faces of the storage battery cells 22 and the downward protrusions 30, to the smoke discharge vent 52, via the gaps GP2 and GP3 between the joining member 42 and the lower case 24 and via the gap GP4 between the cover plate 54 and the lower case 24.

The smoke discharge vent 52 is configured so as to perform valve-opening when the internal pressure of the smoke discharge channel 32 is at least a specific value higher than the externally air pressure of the smoke discharge channel 32. Namely, the smoke discharge vent 52 performs valve-opening when the internal pressure from smoke flowing into the smoke discharge channel 32 has risen to the specific value or higher, and internal gas of the smoke discharge channel 32 is discharged externally.

Furthermore, a membrane member 56 is also attached to the connector block 50. The membrane member 56 is configured to as to prevent passage of liquids (including vapor) while allowing gases to pass through. Moreover, the membrane member 56 is formed such that in cases in which gas passes therethrough, due to the membrane member 56 causing a resistance resisting gas movement to act, such gas does not move all at once over a short period of time.

Next, description follows regarding the operation of the present exemplary embodiment.

In the vehicle 10 applied with the vehicle structure 14 of the present exemplary embodiment, the storage battery modules 20 are each configured from the plural storage battery cells 22. Namely, the plural storage battery cells 22 may be integrated together in the storage battery modules 20.

The storage battery cells 22 are arranged in a row along a first direction (the vehicle front-rear direction) in each of the storage battery modules 20, and storage battery modules 20 are arranged in a row along a second direction (the vehicle width direction). This thereby enables the plural storage battery cells 22 to be arranged efficiently in the first direction and the second direction. In particular, due to array direction of the storage battery cells 22 in the storage battery modules 20 being the vehicle front-rear direction, the number of the storage battery cells 22 that is able to be placed in a single row is increased in comparison to configurations in which the storage battery cells 22 are arrayed in the vehicle width direction.

Although smoke is not generated in a normal state of the storage battery cells 22, in cases in which smoke has been generated for some reason or other, the smoke is discharged from a vehicle width direction central position on the lower face of the storage battery cells 22. This smoke then flows to the smoke discharge vent 52 via the smoke discharge channel 32. When the internal pressure of the smoke discharge channel 32 has risen to at least the specific value higher than the external pressure, the smoke is discharged from the smoke discharge vent 52.

Moreover, the smoke discharge structure 16 of the present exemplary embodiment includes the membrane member 56. The membrane member 56 allows movement of gas with respect to the smoke discharge channel 32, and prevents the movement of liquids. For example, in cases in which the vehicle 10 has travelled to a location (for example a region at high altitude) where the external pressure is different, a pressure difference between the internal pressure of the smoke discharge channel 32 and the external pressure becomes greater. The pressure difference in such cases may be alleviated by the membrane member 56 allowing the passage of air.

Moreover, in the storage battery pack 18 of the present exemplary embodiment, the lower faces 30A of the downward protrusions 30 on the lower case 24 are arranged further to the lower side than lower faces 38A of the coolers 38. Therefore, in the storage battery pack 18, for example, a larger channel cross-sectional area of the smoke discharge channel 32 may be secured than in cases in which the lower faces 30A of the downward protrusions 30 on the lower case 24 are at the same height as the lower faces 38A of the coolers 38, or are above the lower faces 38A of the coolers 38.

Moreover, in the storage battery pack 18 of the present exemplary embodiment, the downward protrusions 30 of the lower case 24 extend along the row direction of the storage battery cells 22. Therefore, in the storage battery pack 18, the smoke discharge channel 32 may be provided so as to be common to plural of the storage battery cells 22.

Moreover, in the storage battery pack 18 of the present exemplary embodiment, a distance H from faces 24B, where the storage battery cells 22 are mounted to the lower case 24, to the bottom faces 30B of the downward protrusions 30, is constant along the extension direction of the downward protrusions 30 (i.e., the row direction of the storage battery cells 22). Therefore, in the storage battery pack 18, for example, the resistance to smoke flowing in the smoke discharge channel 32 may be reduced compared to a configuration in which the distance H changes along the extension direction of the downward protrusions 30.

Moreover, in the storage battery pack 18 of the present exemplary embodiment, the distance W between the opposing wall faces 30C of the downward protrusions 30 on the lower case 24 is constant along the extension direction of the downward protrusions 30. Therefore, in the storage battery pack 18, the resistance to smoke flowing in the smoke discharge channel 32 may be reduced compared, for example, to a configuration in which the distance W changes along the extension direction of the downward protrusions 30.

In the exemplary embodiment described above the lower case 24 and the downward protrusions 30 are integrally formed, however the present disclosure is not limited to such a configuration. For example, the lower case 24 and the downward protrusions 30 may be formed as separate bodies, or only the apex of the downward protrusions 30 may be formed as a separate body.

The following supplements are disclosed in relation to the above exemplary embodiment.

### Supplement 1

A vehicle storage battery pack including:
a storage battery cell installed to a vehicle;
a lower case that has the storage battery cell mounted thereto and that includes a region separated from a lower face of the storage battery cell, the region configuring a smoke discharge channel ; and
a heat receiving member that is arranged on a lower face of the lower case and that receives heat of the storage battery cell,
wherein the lower face of the lower case at a region configuring the smoke discharge channel is arranged lower than a lower face of the heat receiving member.

### Supplement 2

The vehicle storage battery pack of Supplement 1, wherein:
the lower case is mounted with plural of the storage battery cells mounted in one direction; and
the region of the lower case configuring the smoke discharge channel extends in the one direction of the storage battery cells.

### Supplement 3

The vehicle storage battery pack of Supplement 2, wherein a distance from a face of the lower case where the storage battery cells are mounted to a bottom face of the region configuring the smoke discharge channel is constant along the one direction.

### Supplement 4

The vehicle storage battery pack of Supplement 2 or Supplement 3, wherein a distance between opposing wall faces of the region of the lower case configuring the smoke discharge channel is constant along the one direction.

## Claims

1. A vehicle storage battery pack comprising:
a storage battery cell installed to a vehicle;
a lower case that has the storage battery cell mounted thereto and that includes a region separated from a lower face of the storage battery cell, the region configuring a smoke discharge channel; and
a heat receiving member that is arranged on a lower face of the lower case and that receives heat of the storage battery cell,
wherein the lower face of the lower case at a region configuring the smoke discharge channel is arranged lower than a lower face of the heat receiving member.

2. The vehicle storage battery pack of claim 1, wherein:
the lower case is mounted with a plurality of the storage battery cells mounted in a row; and
the region of the lower case configuring the smoke discharge channel extends in a row direction of the storage battery cells.

3. The vehicle storage battery pack of claim 2, wherein a distance from a face of the lower case where the storage battery cells are mounted to a bottom face of the region configuring the smoke discharge channel is constant along the row direction.

4. The vehicle storage battery pack of claim 2 or claim 3, wherein a distance between opposing wall faces of the region of the lower case configuring the smoke discharge channel is constant along the row direction.
